(19) Europäisches Patentamt
European Patent Office
Office européen des brevets

(11) **EP 3 645 219 B1**

(12) **FASCICULE DE BREVET EUROPEEN**

(45) Date de publication et mention de la délivrance du brevet:
**12.01.2022 Bulletin 2022/02**

(51) Int Cl.:
***B25J 9/16*** *(2006.01)* ***B25J 9/00*** *(2006.01)*

(21) Numéro de dépôt: **18758914.8**

(22) Date de dépôt: **28.06.2018**

(86) Numéro de dépôt international:
**PCT/FR2018/051586**

(87) Numéro de publication internationale:
**WO 2019/002772 (03.01.2019 Gazette 2019/01)**

(54) **PROCÉDÉ DE MISE EN MOUVEMENT D'UN EXOSQUELETTE**

VERFAHREN ZUM BEWEGEN EINES EXOSKELETTS

METHOD FOR MOVING AN EXOSKELETON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2017 FR 1756007**

(43) Date de publication de la demande:
**06.05.2020 Bulletin 2020/19**

(73) Titulaire: **Wandercraft**
**75004 Paris (FR)**

(72) Inventeurs:
• **MASSELIN, Matthieu**
**91400 Orsay (FR)**
• **PETRIAUX, Marine**
**91400 Orsay (FR)**

(74) Mandataire: **Regimbeau**
**20, rue de Chazelles**
**75847 Paris Cedex 17 (FR)**

(56) Documents cités:
**EP-A1- 3 025 693 US-A1- 2014 364 962**

• UWE METTIN ET AL: "Motion planning for humanoid robots based on virtual constraints extracted from recorded human movements", INTELLIGENT SERVICE ROBOTICS, vol. 1, no. 4, 3 juillet 2008 (2008-07-03) , pages 289-301, XP055460723, Berlin/Heidelberg ISSN: 1861-2776, DOI: 10.1007/s11370-008-0027-2
• AYUSH AGRAWAL ET AL: "First Steps Towards Translating HZD Control of Bipedal Robots to Decentralized Control of Exoskeletons", IEEE ACCESS, 1 janvier 2017 (2017-01-01), pages 1-1, XP055376624, DOI: 10.1109/ACCESS.2017.2690407
• PCHELKIN STEPAN ET AL: "A dynamic human motion: coordination analysis", BIOLOGICAL CYBERNETICS, SPRINGER VERLAG. HEIDELBERG, DE, vol. 109, no. 1, 27 août 2014 (2014-08-27) , pages 47-62, XP035439776, ISSN: 0340-1200, DOI: 10.1007/S00422-014-0624-4 [extrait le 2014-08-27]

**Description**

DOMAINE TECHNIQUE GENERAL

La présente invention concerne le domaine des robots de type exosquelette.

Plus précisément, elle concerne un procédé de mise en mouvement d'un exosquelette.

ETAT DE L'ART

Récemment, sont apparus pour les personnes avec des problèmes de mobilité importants comme les paraplégiques, des dispositifs de marche assistée appelés exosquelettes, qui sont des dispositifs robotisés externes que l'opérateur (l'utilisateur humain) vient « enfiler » grâce à un système d'attaches qui lie les mouvements de l'exosquelette de ses propres mouvements. Les exosquelettes de membres inférieurs disposent de plusieurs articulations, généralement au moins au niveau des genoux et des hanches, pour reproduire le mouvement de marche. Des actionneurs permettent de mouvoir ces articulations, qui à leur tour font se mouvoir l'opérateur. Un système d'interface permet à l'opérateur de donner des ordres à l'exosquelette, et un système de commande transforme ces ordres en commande pour les actionneurs. Des capteurs viennent généralement compléter le dispositif.

Ces exosquelettes constituent une avancée par rapport aux fauteuils roulants, car ils permettent aux opérateurs de se remettre debout et de marcher. Les exosquelettes ne sont plus limités par les roues et peuvent théoriquement évoluer dans la majorité des environnements non plats : les roues, au contraire des jambes, ne permettent pas de franchir des obstacles importants comme des marches, escaliers, obstacles d'une hauteur trop importante, etc.

Les activités humaines impliquent fréquemment de passer par une position assise : lors des repas, au travail, dans les transports, être assis est une position très courante. L'utilisation de l'exosquelette pour les personnes paraplégiques prévoit même dans une majorité des cas un transfert depuis le fauteuil roulant vers l'exosquelette, en position assise. L'intérêt et même la possibilité de l'utilisation d'un exosquelette dépend donc fortement de sa capacité à se lever, i.e. de passer d'une position assise à une position debout.

Il est ainsi proposé dans les demandes de brevet WO2010044087, EP1260201 et US20130150980 de définir des états « assis » et « debout », et prévoir des algorithmes de transition entre les deux. Plus précisément, on conditionne le lever à la détection d'un contact au sol avec des capteurs de pied, et on active les moteurs sagittaux hanche et genou.

Toutefois, on constate que cette approche est simpliste et est loin de permettre un mouvement confortable et aux sensations naturelles. En effet, la réalisation du mouvement de lever en lui-même présente quatre challenges :

- Les fauteuils, chaises, et autres supports sur lesquels il est possible de s'asseoir présentent une variété de formes, dimensions. De plus, les positions d'installation vont différer en fonction de chaque utilisateur : ce qui est pratique pour un utilisateur ne va pas l'être pour un autre. De même, la position debout doit être différente en fonction des utilisateurs. En effet, chacun a sa propre répartition de masse et donc des positions debout à l'équilibre spécifiques. De plus, certains vont préférer être légèrement en arrière, avec les genoux plus ou moins pliés etc. La position debout idéale dépend même de ce que l'utilisateur désire faire après s'être levé. Tout ceci concourt au fait que les positions de départ et d'arrivée de l'exosquelette pour le lever doivent être adaptées à chaque patient et à chaque cas d'utilisation.

- Pour permettre le mouvement de lever, les pieds du patient doivent rester au sol pendant toute la durée du mouvement. Ainsi même en connaissant la position assise et la position debout, trouver un mouvement allant de l'une à l'autre en respectant la contrainte cinématique sur les pieds n'est pas trivial.

- Les positions assises ont généralement les jambes très pliées avec un centre de pression situé très en arrière des pieds. Le moment du poids au début du mouvement est donc important, et nécessite des couples importants pour réussir à atteindre une posture dépliée. Les contrôleurs standards suivant une trajectoire pré-calculée en temps peuvent aggraver ce problème : si deux articulations n'ont pas la même qualité de suivi, par exemple l'une est en avance sur sa trajectoire et l'autre en retard, la configuration peut rendre le mouvement encore plus difficile. C'est le cas notamment si les hanches se déplient trop vite par rapport aux genoux - le bassin est alors envoyé largement vers l'arrière et exerce un moment très important sur les genoux.

- Il est important de synchroniser le mouvement du haut du corps du patient (qui va par exemple se pencher en avant, ou s'appuyer sur des accoudoirs, ...) avec le mouvement des jambes. Si le patient doit s'adapter à l'exosquelette, les phases de formation deviennent longues et pénibles. Le fait que le mouvement de l'exosquelette s'adapte au mouvement du haut du corps du patient permet de diminuer la formation nécessaire pour le patient. De plus, les patients apprécient le fait de contrôler le mouvement, de participer à son exécution.

Il serait par conséquent souhaitable de disposer d'une nouvelle technique de lever depuis une position assise pour les exosquelettes qui s'affranchisse des contraintes actuelles, et qui soit efficace, universelle (permette le lever quel que soit la chaise et la position initiale de l'utilisateur), confortable et naturelle.

PRESENTATION DE L'INVENTION

La présente invention se rapporte ainsi selon un premier aspect à un procédé de mise en mouvement d'un exosquelette recevant un opérateur humain, depuis une position assise vers une position debout, lesdites positions assise et debout étant telles que ledit exosquelette présente dans lesdites positions assise et debout une pluralité de degrés de liberté chacun actionné par un actionneur commandé par des moyens de traitement de données de sorte qu'aucun degré de liberté est non actionné, le procédé étant caractérisé en ce qu'il comprend la mise en œuvre par les moyens de traitement de données d'étapes de :

(a) Génération d'une trajectoire de l'exosquelette de ladite position assise vers ladite position debout, ladite trajectoire étant paramétrée en fonction du temps.
(b) Application sur ladite trajectoire d'un jeu de contraintes virtuelles sur lesdits degrés de liberté actionnés, les contraintes virtuelles étant paramétrées par une variable de phase,
(c) exécution d'un contrôleur dudit exosquelette associé audit jeu de contraintes virtuelles de sorte à ce que l'exosquelette passe de la position assise à la position debout, ledit contrôleur étant capable de générer des commandes desdits actionneurs de sorte à respecter lesdites contraintes virtuelles pendant ladite trajectoire.

Selon d'autres caractéristiques avantageuses et non limitatives :

- la génération d'une trajectoire de l'exosquelette à l'étape (a) est mise en œuvre lorsqu'une requête de lever est reçue ;
- la requête de lever correspond à une posture dudit opérateur humain ;
- un buste de l'opérateur est équipé d'une pluralité de capteurs de posture, la requête de lever étant détectée en fonction de la posture dudit buste de l'opérateur mesurée par la pluralité de capteurs ;
- l'étape (a) comprend la détermination de ladite position assise et/ou de ladite position debout ;
- l'étape (a) comprend l'identification d'une position provisoire présentée par l'exosquelette lors de la réception de la requête de lever, et la détermination de ladite position assise et de ladite position debout à partir de la position provisoire ;
- lesdites position assise et position debout déterminées sont des positions acceptables par rapport à des contraintes prédéterminées ;
- lesdites contraintes prédéterminées comprennent le fait d'être dans un état de stabilité dans lequel un Centre de Pression, CoP, est à l'intérieur d'une surface de sustentation de l'exosquelette et des contraintes posturales ;
- l'étape (b) comprend la sélection préalable de la variable de phase ;
- sont stockés dans une base de données stockée dans des moyens de stockage de données des couples de :

    - un jeu de contraintes virtuelles sur lesdits degrés de liberté actionnés, les contraintes virtuelles étant paramétrées par une variable de phase,
    - un contrôleur dudit exosquelette associé au jeu de contraintes virtuelles ;

    l'étape (b) comprenant l'identification d'un jeu de contraintes en fonction de la variable de phase choisie.

Selon un deuxième aspect, l'invention concerne un procédé de mise en mouvement d'un exosquelette recevant un opérateur humain, depuis une position debout vers une position assise, lesdites positions assise et debout étant telles que ledit exosquelette présente dans lesdites positions assise et debout une pluralité de degrés de liberté chacun actionné par un actionneur commandé par des moyens de traitement de données de sorte qu'aucun degré de liberté est non actionné, le procédé étant caractérisé en ce qu'il comprend la mise en œuvre par les moyens de traitement de données d'étapes de :

(a) Génération d'une trajectoire de l'exosquelette de ladite position debout vers ladite position assise, ladite trajectoire étant paramétrée en fonction du temps.
(b) Application sur ladite trajectoire d'un jeu de contraintes virtuelles sur lesdits degrés de liberté actionnés, les contraintes virtuelles étant paramétrées par une variable de phase,
(c) exécution d'un contrôleur dudit exosquelette associé audit jeu de contraintes virtuelles de sorte à ce que l'exosquelette passe de la position debout à la position assise, ledit contrôleur étant capable de générer des commandes desdits actionneurs de sorte à respecter lesdites contraintes virtuelles pendant ladite trajectoire.

Selon un troisième aspect, l'invention concerne un exosquelette recevant un opérateur humain, comprenant des moyens de traitement de données configurés pour mettre en œuvre :

- Un module de génération d'une trajectoire de l'exosquelette d'une position assise vers une position debout telles que ledit exosquelette présente dans lesdites positions assise et debout une pluralité de degrés de liberté chacun actionné par un actionneur commandé par les moyens de traitement de données de sorte qu'aucun degré de liberté est non actionné, ladite trajectoire étant paramétrée en fonction du temps.

- Un module d'application sur ladite trajectoire d'un jeu de contraintes virtuelles sur lesdits degrés de liberté actionnés, les contraintes virtuelles étant paramétrées par une variable de phase,
- Un module d'exécution d'un contrôleur associé audit jeu de contraintes virtuelles de sorte à ce que l'exosquelette passe de la position assise à la position debout, ledit contrôleur étant capable de générer des commandes desdits actionneurs de sorte à respecter lesdites contraintes virtuelles pendant ladite trajectoire.

Selon un quatrième aspect, l'invention concerne un exosquelette recevant un opérateur humain, comprenant des moyens de traitement de données configurés pour mettre en œuvre :

- Un module de génération d'une trajectoire de l'exosquelette d'une position debout vers une position assise telles que ledit exosquelette présente dans lesdites positions assise et debout une pluralité de degrés de liberté chacun actionné par un actionneur commandé par les moyens de traitement de données de sorte qu'aucun degré de liberté est non actionné, ladite trajectoire étant paramétrée en fonction du temps.
- Un module d'application sur ladite trajectoire d'un jeu de contraintes virtuelles sur lesdits degrés de liberté actionnés, les contraintes virtuelles étant paramétrées par une variable de phase,
- Un module d'exécution d'un contrôleur associé audit jeu de contraintes virtuelles de sorte à ce que l'exosquelette passe de la position debout à la position assise, ledit contrôleur étant capable de générer des commandes desdits actionneurs de sorte à respecter lesdites contraintes virtuelles pendant ladite trajectoire.

Selon un cinquième et un sixième aspect, l'invention concerne un produit programme d'ordinateur comprenant des instructions de code qui conduisent un exosquelette selon le troisième ou le quatrième aspect de l'invention à exécuter un procédé de mise en mouvement d'un exosquelette selon le premier ou le deuxième aspect de l'invention ; et un moyen de stockage lisible par un équipement informatique sur lequel est enregistré le programme d'ordinateur selon le cinquième aspect de l'invention.

## PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'un exosquelette (de type exosquelette) pour la mise en œuvre du procédé selon l'invention ;
- La figure 2 représente un exemple d'évolution d'une variable de phase, et d'évolution d'un degré de liberté actionné en fonction de cette variable de phase ;
- la figure 3 est un diagramme illustrant un mode de réalisation préféré du procédé selon l'invention.

## DESCRIPTION DETAILLEE

### Architecture

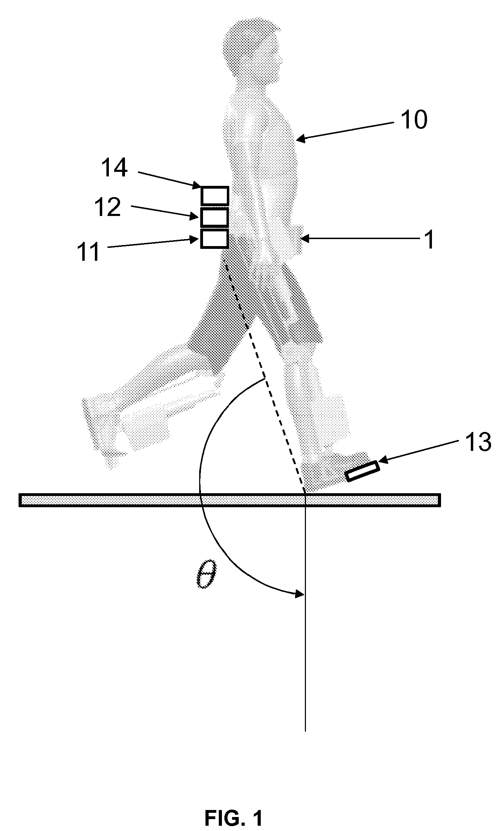

En référence à la **figure 1**, le présent procédé est un procédé de lever d'un exosquelette 1, i.e. un système mécanique articulé de type dispositif robotisé bipède, actionné et commandé, pourvu de deux jambes, accueillant plus précisément un opérateur humain présentant ses membres inférieurs chacun solidaires d'une jambe de l'exosquelette 1 (notamment grâce à des sangles). Il peut ainsi être un robot plus ou moins humanoïde.

L'exosquelette 1 comprend sur chaque jambe une structure de pied comprenant un plan de support sur lequel un pied d'une jambe de la personne portant l'exosquelette peut venir en appui lorsque le pied est à plat.

Par « lever », on entend ici la mise en mouvement de l'exosquelette 1 de sorte à passer d'une position assise à une position debout. Ces termes ont ici leur signification naturelle. Plus précisément, par position assise on entend une position dans lequel l'opérateur équipé de l'exosquelette repose sur un siège, i.e. est supporté au niveau de son « séant ». Comme l'on verra, on choisira généralement une position assise « acceptable », en particulier dans laquelle les deux pieds de l'exosquelette sont posés sur le sol, et à plat. Dans la position debout, l'opérateur repose uniquement sur ses deux jambes, préférentiellement tendues, ce qui signifie qu'il n'y a pas d'autres points de support que les deux pieds. Comme pour la position assise, il s'agit généralement d'une position dans laquelle les deux pieds de l'exosquelette sont posés sur le sol, et à plat. Dans l'une comme l'autre des positions assise et debout, l'exosquelette doit être dans un état de stabilité, c'est-à-dire que l'opérateur peut rester statique sans tomber.

Par état de stabilité, on entend avantageusement un état dans lequel un Centre de Masse, CoM (« Center of Mass »), est à l'intérieur d'une surface de sustentation de l'exosquelette 1. Le CoM coïncide à l'arrêt avec un Point de Moment Zéro, ZMP (Zéro Moment Point ») et désigne plus précisément le point où le moment des forces de contact a deux de ses trois coordonnées nulles (purement vertical).

L'exosquelette 1 présente une pluralité de degrés de liberté, c'est-à-dire d'articulations déformables (généralement via une rotation) c'est-à-dire mobiles les unes par rapport aux autres, qui sont chacun soit « actionné », soit « non-actionné ».

Un degré de liberté actionné désigne une articulation pourvue d'un actionneur commandé par des moyens de traitement de données 11, c'est-à-dire que ce degré de liberté est contrôlé et que l'on peut agir dessus. Au contraire un degré de liberté non actionné désigne une articulation dépourvue d'actionneur, c'est-à-dire que ce degré de liberté suit sa propre dynamique et que les moyens de traitement de données 11 n'ont pas de contrôle direct dessus (mais a priori un contrôle indirect via les autres degrés de liberté actionnés). Dans l'exemple de la figure 1, le contact talon-sol est ponctuel, et l'exosquelette 1 est ainsi libre en rotation par rapport à ce point de contact. L'angle entre l'axe talon-hanche et la verticale constitue alors un degré de liberté non-actionné.

Dans le présent cas, et on verra pourquoi plus loin, lesdites positions assise et debout sont telles que ledit exosquelette 1 ne présente dans ces positions aucun degré de liberté qui soit non actionné, c'est-à-dire que le système n'est pas sous-actionné (le degré de sous-actionnement, i.e. le nombre de degrés de liberté non-actionnés, est égal à zéro ce qui signifie que l'évolution du système est totalement déterminée).

Cela explique pourquoi les positions assise et debout requièrent le plus souvent d'avoir les deux pieds posés et à plat : le contact talon-sol n'est plus ponctuel, et l'angle entre l'axe talon-hanche et la verticale ne constitue alors plus un degré de liberté non-actionné de l'exosquelette 1 faute de rotation libre. On comprendra toutefois que la présente invention n'est pas limitée à des positions assise et debout avec les deux pieds au sol et à plat car la seule condition nécessaire est de ne présenter aucun degré de liberté non actionné, et on peut trouver des positions (en particulier assises) qui sont entièrement actionnées bien qu'un pied ne soit pas posé à plat.

Les moyens de traitement de données 11 désignent un équipement informatique (typiquement un processeur, soit externe si l'exosquelette 1 est « télécommandé » mais préférentiellement embarqué dans l'exosquelette 1) adapté pour traiter des instructions et générer des commandes à destination des différents actionneurs. Ces derniers peuvent être électriques, hydrauliques, etc.

La présente demande ne sera limitée à aucune architecture d'exosquelette 1, et on prendra l'exemple tel que décrit dans les demandes WO2015140352 et WO2015140353.

L'homme du métier saura toutefois adapter le présent procédé à toute autre architecture mécanique.

*Dynamique*

De façon traditionnelle, les trajectoires, c'est-à-dire les évolutions de chaque degré de liberté sont exprimées en fonction du temps. La « dynamique » du système est définie par une fonction

$$f : \chi \times \mathcal{U} \times \mathbb{R}^+ \mapsto \chi$$ et un point de départ $\xi \in \chi$ la fonction $f$ s'écrivant $\dot{x}_t = f(x_t, u_t, t), x_0 = \xi$, $\chi$ étant l'espace d'état de l'exosquelette 1 et $U$ l'espace de contrôle, $t$ représentant le temps.

En méthode dite des « contraintes virtuelles », le principe est de définir pour une sélection des degrés de liberté actionnés une trajectoire paramétrée par un paramètre d'évolution non pas en temps, mais en fonction directement de la configuration, ce paramètre étant nommé variable de phase. Un exemple d'une telle variable de phase est représenté sur la figure 1, il s'agit de l'angle entre l'axe talon-hanche et la verticale qui constitue alors un degré de liberté non-actionné mentionné ci-avant.

La méthode des contraintes virtuelles est bien connue, et est habituellement appliquée à un mouvement dans lequel au moins un degré de liberté est non-actionné, en particulier la marche, comme proposé par exemple dans la demande FR1750217. Un procédé de génération d'une trajectoire d'un robot humanoïde bipède en tenant compte d'un jeu de contraintes virtuelles paramétrées par une variable de phase est divulgué dans UWE METTIN ET AL: "Motion planning for humanoid robots based on virtual constraints extracted from recorded human movements", INTELLIGENT SERVICE ROBOTICS, vol. 1, no. 4, 3 juillet 2008 , pages 289-301.

La variable de phase permet dans un tel cas de définir « l'avancement » d'un pas. Plus précisément, à chaque pas, la variable de phase passe continument d'une valeur initiale à une valeur finale, avant de se voir réaffecter la valeur initiale : c'est le début du pas suivant. Pour faciliter les choses, on peut normaliser la valeur du paramètre de phase entre 0 et 1.

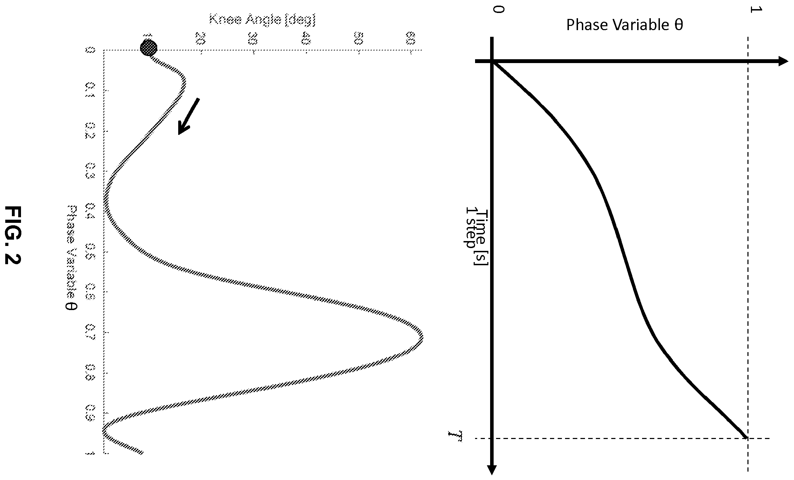

A chaque valeur du paramètre d'évolution correspond une valeur des degrés de liberté actionnés que le système doit s'efforcer de suivre : ce sont ces relations (une pour chaque degré de liberté actionné que l'on souhaite contrôler de cette manière) qu'on nomme contraintes virtuelles. La Figure 2 montre le fonctionnement des contraintes virtuelles pour une articulation, le genou.

Si le système suit exactement cette trajectoire pour les degrés de liberté sur lesquels on peut ou l'on veut agir, en d'autres termes si les contraintes virtuelles sont respectées pour ces degrés de liberté, alors l'évolution du système est totalement déterminée par celle des degrés de liberté non-actionnés qui suivent leur propre dynamique.

Cette dynamique est appelée « Dynamique des Zéros Hybride », ou HZD (Hybrid Zéro Dynamics), car :

- elle est dite « Zéro » puisqu'elle correspond aux degrés sur lesquels la commande ne peut/veut pas agir, i.e. la commande vaut 0 ;
- elle est dite « Hybride » car l'impact du pied sur le sol impose des phases instantanées discontinues qui entrecoupent les phases continues.

Le présent procédé de lever d'un exosquelette 1 utilise de façon inattendue la méthode des contraintes virtuelles alors même que tous les degrés de liberté sont actionnés et le mouvement est non cyclique (il ne s'agit pas d'un pas), et donc que la HZD est inapplicable.

Pendant un mouvement de marche, l'introduction d'une variable de phase est une façon de s'adapter au sous-actionnement du système. Lors du mouvement de lever, le système est entièrement actionné, mais la difficulté est de coordonner le buste du patient et les différentes articulations de l'exosquelette, dont certaines ne bougent pas aussi vite que prévu du fait de saturations du couple moteur, de mouvements imprévus de l'utilisateur ou encore d'autre perturbations.

La Demanderesse a ainsi constaté qu'en choisissant une variable de phase adaptée, et a fortiori une variable de phase différente de celles utilisées pour la marche (une bonne variable de phase pour la marche n'est pas toujours une bonne variable de phase pour le lever : une variable monotone au cours de la marche n'est pas forcément monotone pendant le lever), alors la méthode des contraintes virtuelles permettait de façon surprenante de synchroniser facilement le mouvement de lever, et donc d'éviter que des articulations se déplient trop vite, de sorte à l'exécuter exactement à la vitesse désirée par l'opérateur avec une utilisabilité et un confort sensiblement augmentés.

On prendra notamment des variables de phases sur lesquelles l'utilisateur dispose d'un contrôle direct. On citera par exemple la position du genou, ou l'angle du buste.

*Procédé*

Le présent procédé commence par une étape (a) de génération d'une trajectoire de l'exosquelette 1 de ladite position assise vers ladite position debout, ladite trajectoire étant paramétrée en fonction du temps. Cette étape est préférentiellement mise en œuvre lorsqu'une requête de lever est reçue.

A ce titre, l'étape (a) comprend avantageusement la détection que l'opérateur souhaite se lever, de sorte à générer ladite requête de lever.

En effet, si l'exosquelette 1 est un exosquelette recevant un opérateur humain, c'est la posture dudit opérateur humain qui détermine ses intentions (contrairement au cas d'un robot normal qui peut directement recevoir une requête de lever standardisée). Il faut ainsi faire la différence entre un simple mouvement de l'opérateur sur sa chaise (par exemple se tourner pour regarder à gauche tout en restant assis) et le mouvement vers une position debout.

Pour cela, l'opérateur peut être muni d'un gilet de capteurs 10 permettant de détecter la configuration de son buste (orientation de celui-ci). La requête de lever peut correspondre à une posture particulière de l'opérateur, par exemple se pencher en avant, signifiant son intention d'initier un mouvement d'une position assise vers une position debout, et donc ordonnant aux moyens de traitement de données de mettre en œuvre l'étape (a). Cet algorithme de démarrage peut se baser sur des mouvements paramétrés pré-calculés et testés en amont ou sur des mouvements référencés capteurs, par exemple, des moyens de détection de l'impact des pieds au sol 13 et/ou des moyens de mesure inertielle 14 équipés sur l'exosquelette 1. Alternativement, la requête de lever peut correspondre à l'appui par l'opérateur sur un bouton.

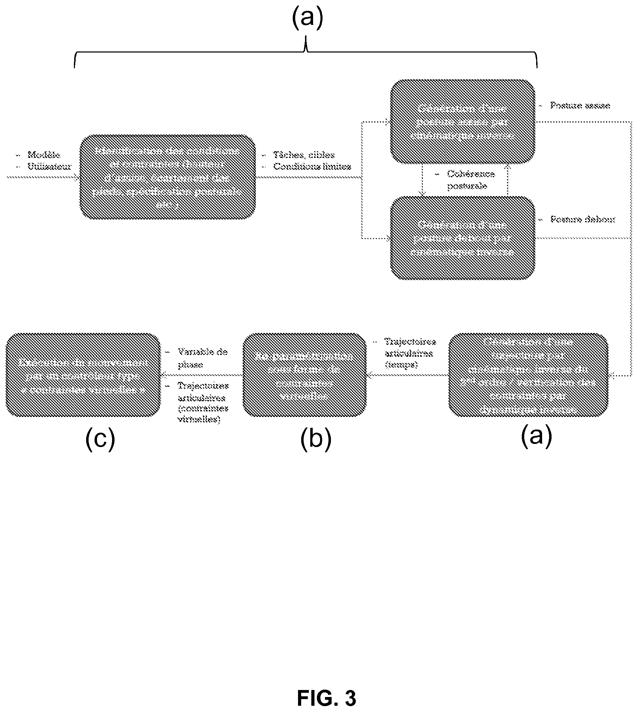

Suite à cette réception d'une requête de lever, en référence à la **figure 3,** l'étape (a) peut comprendre une sous-étape préalable de génération de la position assise et/ou de la position debout. Cette sous-étape est optionnelle puisque ces positions peuvent être directement disponibles (en particulier, l'opérateur peut se trouver d'ores et déjà dans une position assise acceptable au moment de l'initiation du mouvement, et la position debout cible peut être prévue d'avance).

Partant d'une position assise « provisoire » correspondant à celle présentée lorsque la réception de la requête de lever est avantageusement déterminée une position assise « de départ » qui est la position assise acceptable qui sera utilisée par le présent procédé (celle depuis laquelle le mouvement vers la position debout sera mis en œuvre, à noter que dans la suite de la présente description par « position assise » on entendra une position assise acceptable et en particulier ladite position assise de départ).

Plus précisément, les positions assise et debout « acceptables » sont une position dans laquelle comme expliqué tous les degrés de liberté sont actionnés (typiquement pieds au sol), préférentiellement avec respect de contraintes dont une contrainte de stabilité (CoP au-dessus des appuis), des contraintes posturales telles que des amplitudes articulaires, des couples, etc., et des contraintes définies par la position provisoire telles que la hauteur d'assise (pour la position assise uniquement), l'écartement des pieds, l'orientation du bassin, etc. A noter qu'au contraire certaines contraintes comme l'écartement des pieds ou l'orientation du bassin peuvent être redéfinies par rapport à la position provisoire si leur valeurs ne permettent pas une trajectoire correcte.

La détermination de l'une ou l'autre des positions assise ou debout acceptables peut être accompli par cinématique inverse avec définition de tâches correspondantes.

La position assise et la position debout partagent préférentiellement une cohérence posturale, par exemple la même position des pieds (ce qui signifie que c'est uniquement le reste de l'exosquelette 1 qui bouge), de sorte à garantir que l'on maintient tout au long du mouvement le fait que tous les degrés de liberté soient actionnés.

Ainsi, de façon particulièrement préférée, l'étape (a) comprend immédiatement après la réception de la requête de lever l'identification d'une position assise provisoire. A partir de là, sont calculées les contraintes associées qui vont servir de base à la détermination des positions assise et debout acceptables (hauteur d'assise, écartement des pieds, spécifications posturales, etc.) en utilisant un modèle de l'opérateur et de l'exosquelette 1, qui peut être prégénéré à partir de mesures spécifiques à l'opérateur (distances entre centres articulaires, poids, taille).

Les positions assise (de départ) et debout sont alors déterminées grâce auxdites contraintes, en recherchant la cohérence posturale. La trajectoire en fonction du temps les reliant peut alors être déterminée.

La détermination de trajectoire de l'étape (a) entre les positions assise et debout peut être faite de nombreuses façons connues, par exemple par cinématique inverse du second ordre.

Une trajectoire dynamique permettant de relier une position à une autre est définie en particulier par les positions/vitesses/accélérations en fonction du temps pour toutes les articulations avec respect des éventuelles contraintes systèmes mentionnées ci-avant : amplitudes articulaires, vitesses, couples disponibles, pieds qui restent au sol, etc.

L'étape (a) permet ainsi de façon simple de s'assurer que la trajectoire est faisable et de prendre en compte les éventuelles contraintes de couples, articulaires etc.

Dans une étape (b), la trajectoire temporelle est passée en contraintes virtuelles. Plus précisément, est appliqué sur ladite trajectoire un jeu de contraintes virtuelles sur lesdits degrés de liberté actionnés, les contraintes virtuelles étant paramétrées par une variable de phase.

Cette étape (b) peut comprendre la sélection préalable de ladite variable de phase. Comme expliqué, on a besoin d'une variable dont l'évolution est monotone au cours du mouvement, et mesurable. Il est préférable que l'opérateur puisse agir sur l'évolution de cette variable, afin qu'il contrôle l'exécution du mouvement. Ce passage aux contraintes virtuelles évite comme déjà mentionné que les articulations se déplient trop vite, d'où l'augmentation sensible du confort.

Pour un jeu de contraintes virtuelles donné l'espace d'état « contraint » est une variété topologique de la dynamique dans laquelle chaque point est défini par la valeur du paramètre de phase (et le cas échéant leur dérivées).

Le jeu de contraintes virtuelles est associé à un contrôleur capable de générer des commandes desdits actionneurs de sorte à respecter lesdites contraintes virtuelles pendant une trajectoire.

A noter qu'une pluralité de jeux de contraintes peut être disponible, correspondant à des variables de phase différentes, ou tout simplement des hauteurs d'assise ou des vitesses de lever différentes.

A ce titre, le présent procédé propose avantageusement l'utilisation d'une base de données (appelée bibliothèque de contrôle) stockée dans des moyens de stockage de données 12 (une mémoire connectée aux moyens de traitement de données 11) d'au moins un couple de :

- un jeu de contraintes virtuelles sur lesdits degrés de liberté actionnés, les contraintes virtuelles étant paramétrées par une variable de phase,
- un contrôleur dudit exosquelette 1 (associé au jeu de contraintes virtuelles) capable de générer des commandes desdits actionneurs de sorte à respecter lesdites contraintes virtuelles en mettant en œuvre au moins une trajectoire stable.

L'homme du métier sait les générer. L'étape (b) peut ainsi comprendre l'identification du couple d'un jeu de contraintes virtuelles et d'un contrôleur, en particulier en fonction de la variable de phase sélectionnée.

Dans une étape finale (c), est exécuté ledit contrôleur dudit exosquelette 1 associé au jeu de contraintes virtuelles (le cas échéant identifié) de sorte à ce que l'exosquelette 1 passe de la position assise à la position debout.

Plus précisément, le contrôleur applique la trajectoire paramétrée en fonction de la variable de phase : grâce au contrôleur à chaque instant on calcule la variable de phase et on redéfinit la consigne en position et en vitesse de chaque articulation actionnée en conséquence.

A noter que dans le cas où une position assise acceptable différente de la position provisoire doit être déterminée, l'étape (c) doit comprendre le passage dans cette position assise acceptable avant d'exécuter le contrôleur. Cependant, celle-ci est généralement proche de la position provisoire présentée par l'exosquelette au démarrage du procédé.

En pratique, ce sont deux positions assises présentant des conditions communes telles que la hauteur d'assise. La position provisoire est souvent jambes semi-tendues, alors que la position assise acceptable présente les jambes plus repliées pour passer les pieds sous l'assise.

Cette solution s'avère particulièrement efficace, car toute la complexité du lever est réalisée en amont. En fonctionnement, le contrôleur de l'exosquelette n'a plus qu'à appliquer la trajectoire obtenue pour obtenir un mouvement de lever confortable et naturel, quelle que soit la configuration.

A partir de là un procédé de mise en mouvement (marche) peut prendre le relais, en particulier celui tel que défini par exemple dans la demande FR1750217, en utilisant de nouveaux jeux de contraintes virtuelles et des contrôleurs cette fois de type HZD (de fait de l'existence de degrés de liberté non-actionnés pendant la marche).

A noter qu'un procédé « opposé » de mise en mouvement de l'exosquelette 1 depuis une position debout vers une position assise (i.e. pour s'asseoir au lieu de se lever) peut être mis en œuvre de façon similaire.

Ce second procédé est basé sur le même principe, il est identique au premier procédé en intervertissant les positions assise et debout : il comprend la mise en œuvre par les moyens de traitement de données 11 d'étapes de :

(a) Génération d'une trajectoire de l'exosquelette 1 de ladite position debout vers ladite position assise, ladite trajectoire étant paramétrée en fonction du temps.

(b) Application sur ladite trajectoire d'un jeu de contraintes virtuelles sur lesdits degrés de liberté actionnés, les contraintes virtuelles étant paramétrées par une variable de phase,

(c) exécution d'un contrôleur dudit exosquelette 1 associé audit jeu de contraintes virtuelles de sorte à ce que l'exosquelette 1 passe de la position debout à la position assise, ledit contrôleur étant capable de générer des commandes desdits actionneurs de sorte à respecter lesdites contraintes virtuelles pendant ladite trajectoire.

L'homme du métier saura transposer les étapes de détermination des positions debout et assise acceptables, et tous les modes de réalisation du premier procédé (de lever) pourront être adaptés au deuxième procédé (pour s'asseoir).

*Equipements et système*

Selon d'autres aspects, l'invention concerne l'exosquelette 1, en particulier de type exosquelette, pour la mise en œuvre du procédé selon le premier aspect (lever) et/ou le deuxième aspect (fait de s'asseoir).
Comme expliqué, l'exosquelette 1 comprend des moyens de traitement de données 11 et des moyens de stockage de données 12 (éventuellement externes), et si nécessaire des moyens de mesure inertielle 14 (centrale à inertie) et/ou des moyens pour détecter l'impact des pieds au sol 13 (capteurs de contact ou éventuellement capteurs de pression).
Il présente une pluralité de degrés de liberté dont au moins un degré de liberté actionné par un actionneur commandé par les moyens de traitement de données 11, et en particulier dans lesdites positions assise et debout une pluralité de degrés de liberté est chacun actionné par un actionneur commandé par les moyens de traitement de données 11 de sorte qu'aucun degré de liberté est non actionné.
Les moyens de traitement de données 11 sont configurés pour mettre en œuvre :

- Un module de génération d'une trajectoire de l'exosquelette 1 d'une position assise vers une position debout (et/ou d'une position debout vers une position assise) telles que ledit exosquelette 1 présente dans lesdites positions assise et debout une pluralité de degrés de liberté chacun actionné par un actionneur commandé par les moyens de traitement de données 11 de sorte qu'aucun degré de liberté est non actionné, ladite trajectoire étant paramétrée en fonction du temps.
- Un module d'application sur ladite trajectoire d'un jeu de contraintes virtuelles sur lesdits degrés de liberté actionnés, les contraintes virtuelles étant paramétrées par une variable de phase,
- Un module d'exécution d'un contrôleur associé audit jeu de contraintes virtuelles de sorte à ce que l'exosquelette 1 passe de la position assise à la position debout (et/ou de la position debout à la position assise), ledit contrôleur étant capable de générer des commandes desdits actionneurs de sorte à respecter lesdites contraintes virtuelles pendant ladite trajectoire.

*Produit programme d'ordinateur*

Selon un cinquième et un sixième aspects, l'invention concerne un produit programme d'ordinateur comprenant des instructions de code pour l'exécution (sur les moyens de traitement 11) d'un procédé de mise en mouvement d'un exosquelette 1 selon le premier ou le deuxième aspect de l'invention, ainsi que des moyens de stockage lisibles par un équipement informatique (par exemple les moyens de stockage de données 12) sur lequel on trouve ce produit programme d'ordinateur.

**Revendications**

1. Procédé de mise en mouvement d'un exosquelette (1) recevant un opérateur humain, depuis une position assise vers une position debout, lesdites positions assise et debout étant telles que ledit exosquelette (1) présente dans lesdites positions assise et debout une pluralité de degrés de liberté chacun actionné par un actionneur commandé par des moyens de traitement de données (11) de sorte qu'aucun degré de liberté est non actionné, le procédé étant **caractérisé en ce qu'**il comprend la mise en œuvre par les moyens de traitement de données (11) d'étapes de :

(a) Génération d'une trajectoire de l'exosquelette (1) de ladite position assise vers ladite position debout, ladite trajectoire étant paramétrée en fonction du temps.
(b) Application sur ladite trajectoire d'un jeu de contraintes virtuelles sur lesdits degrés de liberté actionnés, les contraintes virtuelles étant paramétrées par une variable de phase,
(c) exécution d'un contrôleur dudit exosquelette (1) associé audit jeu de contraintes virtuelles de sorte à ce que l'exosquelette (1) passe de la position assise à la position debout, ledit contrôleur étant capable de générer des commandes desdits actionneurs de sorte à respecter lesdites contraintes virtuelles pendant ladite trajectoire.

**2.** Procédé selon la revendication 1, dans lequel la génération d'une trajectoire de l'exosquelette (1) à l'étape (a) est mise en œuvre lorsqu'une requête de lever est reçue.

**3.** Procédé selon la revendication 2, dans lequel la requête de lever correspond à une posture dudit opérateur humain.

**4.** Procédé selon la revendication 3, dans lequel un buste de l'opérateur est équipé d'une pluralité de capteurs de posture, la requête de lever étant détectée en fonction de la posture dudit buste de l'opérateur mesurée par la pluralité de capteurs.

**5.** Procédé selon l'une des revendications 1 à 4, dans lequel l'étape (a) comprend la détermination de ladite position assise et/ou de ladite position debout.

**6.** Procédé selon la revendication 5 et l'une des revendications 2 à 4 en combinaison, dans lequel l'étape (a) comprend l'identification d'une position provisoire présentée par l'exosquelette (1) lors de la réception de la requête de lever, et la détermination de ladite position assise et de ladite position debout à partir de la position provisoire.

**7.** Procédé selon la revendication 6, dans lequel lesdites position assise et position debout déterminées sont des positions acceptables par rapport à des contraintes prédéterminées.

**8.** Procédé selon la revendication 7, dans lequel lesdites contraintes prédéterminées comprennent le fait d'être dans un état de stabilité dans lequel un Centre de Pression, CoP, est à l'intérieur d'une surface de sustentation de l'exosquelette (1) et des contraintes posturales.

**9.** Procédé selon l'une des revendications 1 à 8, dans lequel l'étape (b) comprend la sélection préalable de la variable de phase.

**10.** Procédé selon la revendication 9, dans lequel sont stockés dans une base de données stockée dans des moyens de stockage de données (12) des couples de :

- un jeu de contraintes virtuelles sur lesdits degrés de liberté actionnés, les contraintes virtuelles étant paramétrées par une variable de phase,
- un contrôleur dudit exosquelette (1) associé au jeu de contraintes virtuelles ;
l'étape (b) comprenant l'identification d'un jeu de contraintes en fonction de la variable de phase choisie.

**11.** Procédé de mise en mouvement d'un exosquelette (1) recevant un opérateur humain, depuis une position debout vers une position assise, lesdites positions assise et debout étant telles que ledit exosquelette (1) présente dans lesdites positions assise et debout une pluralité de degrés de liberté chacun actionné par un actionneur commandé par des moyens de traitement de données (11) de sorte qu'aucun degré de liberté est non actionné, le procédé étant **caractérisé en ce qu'**il comprend la mise en œuvre par les moyens de traitement de données (11) d'étapes de :

(a) Génération d'une trajectoire de l'exosquelette (1) de ladite position debout vers ladite position assise, ladite trajectoire étant paramétrée en fonction du temps.
(b) Application sur ladite trajectoire d'un jeu de contraintes virtuelles sur lesdits degrés de liberté actionnés, les contraintes virtuelles étant paramétrées par une variable de phase,
(c) exécution d'un contrôleur dudit exosquelette (1) associé audit jeu de contraintes virtuelles de sorte à ce que l'exosquelette (1) passe de la position debout à la position assise, ledit contrôleur étant capable de générer des commandes desdits actionneurs de sorte à respecter lesdites contraintes virtuelles pendant ladite trajectoire.

**12.** Exosquelette (1) recevant un opérateur humain, étant **caractérisé en ce qu'**il comprend des moyens de traitement de données (11) configurés pour mettre en œuvre :

- Un module de génération d'une trajectoire de l'exosquelette (1) d'une position assise vers une position debout telles que ledit exosquelette (1) présente dans lesdites positions assise et debout une pluralité de degrés de liberté chacun actionné par un actionneur commandé par les moyens de traitement de données (11) de sorte qu'aucun degré de liberté est non actionné, ladite trajectoire étant paramétrée en fonction du temps.
- Un module d'application sur ladite trajectoire d'un jeu de contraintes virtuelles sur lesdits degrés de liberté actionnés, les contraintes virtuelles étant paramétrées par une variable de phase,
- Un module d'exécution d'un contrôleur associé audit jeu de contraintes virtuelles de sorte à ce que l'exosquelette (1) passe de la position assise à la position debout, ledit contrôleur étant capable de générer des commandes desdits actionneurs de sorte à respecter lesdites contraintes virtuelles pendant ladite trajectoire.

13. Exosquelette (1) recevant un opérateur humain, étant **caractérisé en ce qu'**il comprend des moyens de traitement de données (11) configurés pour mettre en œuvre :

- Un module de génération d'une trajectoire de l'exosquelette (1) d'une position debout vers une position assise telles que ledit exosquelette (1) présente dans lesdites positions assise et debout une pluralité de degrés de liberté chacun actionné par un actionneur commandé par les moyens de traitement de données (11) de sorte qu'aucun degré de liberté est non actionné, ladite trajectoire étant paramétrée en fonction du temps.
- Un module d'application sur ladite trajectoire d'un jeu de contraintes virtuelles sur lesdits degrés de liberté actionnés, les contraintes virtuelles étant paramétrées par une variable de phase,
- Un module d'exécution d'un contrôleur associé audit jeu de contraintes virtuelles de sorte à ce que l'exosquelette (1) passe de la position debout à la position assise, ledit contrôleur étant capable de générer des commandes desdits actionneurs de sorte à respecter lesdites contraintes virtuelles pendant ladite trajectoire.

14. Produit programme d'ordinateur comprenant des instructions de code qui conduisent un exosquelette (1) selon les revendications 12 ou 13 à exécuter un procédé de mise en mouvement d'un exosquelette (1) selon l'une des revendications 1 à 11, lorsque ledit programme est exécuté sur un ordinateur.

15. Moyen de stockage lisible par un équipement informatique sur lequel est enregistré le programme d'ordinateur selon la revendication 14.


**Patentansprüche**

1. Verfahren zum Inbewegungversetzen eines Exoskeletts (1), das einen menschlichen Bediener aufnimmt, aus einer sitzenden Position in eine stehende Position, wobei die sitzende Position und die stehende Position so sind, dass das Exoskelett (1) in der sitzenden Position und der stehenden Position eine Vielzahl von Freiheitsgraden aufweist, die jeweils durch einen Aktuator betätigt werden, der durch Datenverarbeitungsmittel (11) gesteuert wird, so dass kein Freiheitsgrad unbetätigt ist, wobei das Verfahren **dadurch gekennzeichnet ist, dass** es die Durchführung der Schritte durch die Datenverarbeitungsmittel (11) umfasst:

(a) Erzeugen einer Trajektorie des Exoskeletts (1) von der sitzenden Position in die stehende Position, wobei die Trajektorie als eine Funktion der Zeit parametriert ist.
(b) Anwenden eines Satzes von virtuellen Beschränkungen auf die Trajektorie in den betätigten Freiheitsgraden, wobei die virtuellen Beschränkungen durch eine Phasenvariable parametriert werden,
(c) Ausführen einer Steuerung des Exoskeletts (1) in Verbindung mit einem Satz virtueller Beschränkungen, so dass das Exoskelett (1) aus der sitzenden Position in die stehende Position gelangt, wobei die Steuerung in der Lage ist, Befehle der Aktuatoren zu generieren, so dass die virtuellen Beschränkungen während der Trajektorie eingehalten werden.

2. Verfahren nach Anspruch 1, wobei die Erzeugung einer Trajektorie des Exoskeletts (1) in Schritt (a) durchgeführt wird, wenn eine Aufforderung zum Aufstehen empfangen wird.

3. Verfahren nach Anspruch 2, wobei die Aufforderung zum Aufstehen einer Körperhaltung des menschlichen Bedieners entspricht.

4. Verfahren nach Anspruch 3, wobei ein Oberkörper des Bedieners mit einer Vielzahl von Haltungssensoren ausgestattet ist, wobei die Aufforderung zum Aufstehen in Abhängigkeit der Haltung des Bedieneroberkörpers erfasst wird, die von der Mehrzahl der Sensoren gemessen wird.

5. Verfahren nach einem der Ansprüche 1 bis 4, wobei Schritt (a) die Festlegung der sitzenden Position und/oder der stehenden Position umfasst.

6. Verfahren nach Anspruch 5 und in Kombination mit einem der Ansprüche 2 bis 4, wobei Schritt (a) bei der Aufforderung zum Aufstehen die Identifizierung einer vorläufigen vom Exoskelett (1) dargelegten Position, und das Festlegen der sitzenden Position und der stehenden Position infolge der vorläufigen Position umfasst.

7. Verfahren nach Anspruch 6, wobei die festgelegten sitzenden und stehenden Positionen akzeptable Positionen in Bezug auf die vorab festgelegten Beschränkungen sind.

8. Verfahren nach Anspruch 7, wobei die vorbestimmten Beschränkungen umfassen, in einem stabilen Zustand zu sein, in dem sich ein Druckzentrum, CoP, innerhalb einer Standfläche des Exoskeletts (1) und der Zwangshaltungen befindet.

9. Verfahren nach einem der Ansprüche 1 bis 8, wobei Schritt (b) die Vorauswahl der Phasenvariablen umfasst.

10. Verfahren nach Anspruch 9, wobei in einer gespeicherten Datenbank in den Datenspeichermitteln (12) Paare gespeichert werden:

- einem Satz von virtuellen Beschränkungen der betätigten Freiheitsgrade, wobei die virtuellen Beschränkungen durch eine Phasenvariable parametriert sind,
- eine Steuerung des Exoskeletts (1), die dem Satz virtueller Beschränkungen zugeordnet ist; wobei Schritt (b) das Identifizieren eines Satzes von Beschränkungen in Abhängigkeit von der gewählten Phasenvariablen umfasst.

11. Verfahren zum Inbewegungversetzen eines Exoskeletts (1), das einen menschlichen Bediener aufnimmt, aus einer stehenden Position in eine sitzende Position, wobei die sitzende Position und die stehende Position so sind, dass das Exoskelett (1) in der sitzenden und der stehenden Position eine Vielzahl von Freiheitsgraden aufweist, die jeweils durch einen Aktuator betätigt werden, der durch Datenverarbeitungsmittel (11) gesteuert wird, so dass kein Freiheitsgrad unbetätigt ist, wobei das Verfahren **dadurch gekennzeichnet ist, dass** es die Durchführung der Schritte durch die Datenverarbeitungsmittel (11) umfasst:

(a) Erzeugen einer Trajektorie des Exoskeletts (1) von der stehenden Position in die sitzende Position, wobei die Trajektorie in Abhängigkeit von der Zeit parametriert wird.
(b) Anwenden eines Satzes von virtuellen Beschränkungen auf die Trajektorie in den betätigten Freiheitsgraden, wobei die virtuellen Beschränkungen durch eine Phasenvariable parametriert werden,
(c) Ausführen einer Kontrollsteuerung des Exoskeletts (1) in Verbindung mit dem Satz der virtuellen Beschränkungen, so dass das Exoskelett (1) von der stehenden Position in die sitzende Position wechselt, wobei die Kontrollsteuerung in der Lage ist, Befehle der Aktuatoren zu erzeugen, so dass die virtuellen Beschränkungen während der Trajektorie eingehalten werden.

12. Exoskelett (1), das einen menschlichen Bediener aufnimmt, **dadurch gekennzeichnet, dass** es konfigurierte Datenverarbeitungsmittel (11) für die Durchführung umfasst:

- Ein Modul zur Erzeugung einer Trajektorie des Exoskeletts (1) von einer sitzenden Position in eine stehende Position, wobei das Exoskelett (1) in den sitzenden und stehenden Positionen eine Vielzahl von Freiheitsgraden aufweist, die jeweils durch einen Aktuator betätigt werden, der durch die Datenverarbeitungsmittel (11) gesteuert wird, so dass kein Freiheitsgrad unbetätigt ist, wobei die Trajektorie in Abhängigkeit von der Zeit parametriert wird.
- Ein Modul zur Anwendung auf der Trajektorie eines Satzes von virtuellen Beschränkungen in den bestätigten Freiheitsgraden, wobei die virtuellen Beschränkungen durch eine Phasenvariable parametriert werden,
- Ein Modul zum Ausführen einer Kontrollsteuerung, die dem Satz von virtuellen Beschränkungen so zugeordnet ist, dass das Exoskelett (1) von der sitzenden Position in die stehende Position wechselt, wobei die Kontrollsteuerung in der Lage ist, Befehle der Aktuatoren zu erzeugen, so dass die virtuellen Beschränkungen während der Trajektorie eingehalten werden.

13. Exoskelett (1), das einen menschlichen Bediener aufnimmt, **dadurch gekennzeichnet, dass** es konfigurierte Datenverarbeitungsmittel (11) für die Durchführung umfasst:

- Ein Modul zur Erzeugung einer Trajektorie des Exoskeletts (1) von einer stehenden Position in eine sitzende Position, sodass das Exoskelett (1) in der sitzenden und der stehenden Position eine Vielzahl von Freiheitsgraden aufweist, die jeweils durch einen Aktuator betätigt werden, der durch die Datenverarbeitungsmittel (11) gesteuert wird, so dass kein Freiheitsgrad unbetätigt ist, wobei die Trajektorie als eine Funktion der Zeit parametriert ist.
- Ein Modul zur Anwendung auf der Trajektorie eines Satzes von Beschränkungen in den bestätigten Freiheitsgraden, wobei die virtuellen Beschränkungen durch eine Phasenvariable parametriert werden.
- Ein Modul zum Ausführen einer Kontrollsteuerung, die dem Satz virtueller Beschränkungen zugeordnet ist, so dass das Exoskelett (1) von der stehenden Position in die sitzende Position wechselt, wobei die Kontrollsteuerung in der Lage ist, Befehle der Aktuatoren zu erzeugen, um die virtuellen Beschränkungen während der Trajektorie zu beachten.

14. Computerprogrammprodukt umfassend Quellcode-Anweisungen, die ein Exoskelett (1) nach Ansprüchen 12 oder 13 dazu veranlassen, ein Verfahren zum Inbewegungversetzen eines Exoskeletts (1), nach einem der Ansprüche 1 bis 11, auszuführen, wenn das Programm auf einem Computer ausgeführt wird.

**15.** Speichermedium, das von einer Computerausrüstung lesbar ist, auf dem das Computerprogramm nach Anspruch 14 gespeichert ist.

**Claims**

**1.** Method for moving an exoskeleton (1) accommodating a human operator, from a seated position to a standing position, said seated and standing positions being such that said exoskeleton (1) has in said seated and standing positions a plurality of degrees of freedom each actuated by an actuator controlled by data processing means (11) in such a way that no degree of freedom is non-actuated, the method being **characterised in that** it comprises the implementation by the data processing means (11) of steps of:

(a) Generating a trajectory of the exoskeleton (1) from said seated position to said standing position, said trajectory being parameterised as a function of time.
(b) Applying to said trajectory a set of virtual constraints on said actuated degrees of freedom, the virtual constraints being parameterised by a phase variable,
(c) Running a controller of said exoskeleton (1) associated with said set of virtual constraints such that the exoskeleton (1) moves from the seated position to the standing position, said controller being capable of generating commands for said actuators so as to comply with said virtual constraints during said trajectory.

**2.** Method according to claim 1, in which the generation of a trajectory of the exoskeleton (1) at step (a) is implemented when a request to stand up is received.

**3.** Method according to claim 2, in which the request to stand up corresponds to a posture of said human operator.

**4.** Method according to claim 3, in which a bust of the operator is equipped with a plurality of posture sensors, the request to stand up being detected as a function of the posture of said bust of the operator measured by the plurality of sensors.

**5.** Method according to one of claims 1 to 4, in which step (a) comprises the determination of said seated position and/or said standing position.

**6.** Method according to claim 5 and one of claims 2 to 4 in combination, in which step (a) comprises the identification of a temporary position taken by the exoskeleton (1) during the reception of the request to stand up, and the determination of said seated position and said standing position from the temporary position.

**7.** Method according to claim 6, in which said determined seated position and standing position are acceptable positions with respect to predetermined constraints.

**8.** Method according to claim 7, in which said predetermined constraints comprise the fact of being in a stability state in which a Centre of Pressure, CoP, is within a sustentation surface of the exoskeleton (1) and postural constraints.

**9.** Method according to one of claims 1 to 8, in which step (b) comprises the prior selection of the phase variable.

**10.** Method according to claim 9, in which in a database stored in data storage means (12) are stored pairs of:

- a set of virtual constraints on said actuated degrees of freedom, the virtual constraints being parameterised by a phase variable,
- a controller of said exoskeleton (1) associated with the set of virtual constraints;
step (b) comprising the identification of a set of constraints as a function of the chosen phase variable.

**11.** Method for moving an exoskeleton (1) accommodating a human operator, from a standing position to a seated position, said seated and standing positions being such that said exoskeleton (1) has in said seated and standing positions a plurality of degrees of freedom each actuated by an actuator controlled by data processing means (11) in such a way that no degree of freedom is non-actuated, the method being **characterised in that** it comprises the implementation by the data processing means (11) of steps of:

(a) Generating a trajectory of the exoskeleton (1) from said standing position to said seated position, said trajectory being parameterised as a function of time.
(b) Applying to said trajectory a set of virtual constraints on said actuated degrees of freedom, the virtual constraints being parameterised by a phase variable,
(c) Running a controller of said exoskeleton (1) associated with said set of virtual constraints such that the exoskeleton (1) moves from the standing position to the seated position, said controller being capable of generating commands for said actuators so as to comply with said virtual constraints during said trajectory.

**12.** Exoskeleton (1) accommodating a human operator, being **characterised in that** it comprises data processing means (11) configured to implement:

- A module for generating a trajectory of the exoskeleton (1) from a seated position to a standing position such that said exoskeleton (1) has in said seated and standing positions a plurality of degrees of freedom each actuated by an actuator controlled by the data processing means (11) in such a way that no degree of freedom is non-actuated, said trajectory being parameterised as a function of time.
- A module for applying to said trajectory a set of virtual constraints on said actuated degrees of freedom, the virtual constraints being parameterised by a phase variable,
- A module for running a controller associated with said set of virtual constraints such that the exoskeleton (1) moves from the seated position to the standing position, said controller being capable of generating commands for said actuators so as to comply with said virtual constraints during said trajectory.

**13.** Exoskeleton (1) accommodating a human operator, being **characterised in that** it comprises data processing means (11) configured to implement:

- A module for generating a trajectory of the exoskeleton (1) from a standing position to a seated position such that said exoskeleton (1) has in said seated and standing positions a plurality of degrees of freedom each actuated by an actuator controlled by the data processing means (11) in such a way that no degree of freedom is non-actuated, said trajectory being parameterised as a function of time.
- A module for applying to said trajectory a set of virtual constraints on said actuated degrees of freedom, the virtual constraints being parameterised by a phase variable,
- A module for running a controller associated with said set of virtual constraints such that the exoskeleton (1) moves from the standing position to the seated position, said controller being capable of generating commands for said actuators so as to comply with said virtual constraints during said trajectory.

**14.** Computer program product comprising code instructions which operate an exoskeleton (1) according to claims 12 or 13 to run a method for moving an exoskeleton (1) according to one of claims 1 to 11, when said program is run on a computer.

**15.** Storage means that can be read by a computer equipment on which a computer program product is saved according to claim 14.

**FIG. 1**

**FIG. 2**

FIG. 3

## RÉFÉRENCES CITÉES DANS LA DESCRIPTION

**Documents brevets cités dans la description**

- WO 2010044087 A
- EP 1260201 A
- US 20130150980 A
- WO 2015140352 A
- WO 2015140353 A
- FR 1750217

**Littérature non-brevet citée dans la description**

- **UWE METTIN et al.** Motion planning for humanoid robots based on virtual constraints extracted from recorded human movements. *INTELLIGENT SERVICE ROBOTICS,* 03 Juillet 2008, vol. 1 (4), 289-301